# EUROPEAN PATENT SPECIFICATION

(11) **EP 2 602 234 B1**
(45) Date of publication and mention of the grant of the patent: **15.11.2017**
(21) Application number: 12478002.4
(22) Date of filing: 22.11.2012
(51) Int. Cl.: C04B 28/02, C04B 28/10, C04B 40/02

(54) **Method for manufacturing of products from autoclaved aerated concrete and composition of autoclaved aerated concrete**
Verfahren zur Herstellung von Produkten aus Porenbeton und Zusammensetzung von Porenbeton
Procédé de fabrication de produits de béton cellulaire autoclavé et de la composition du béton cellulaire autoclavé

(30) Priority: 07.12.2011 LT 2011101
(43) Date of publication of application: 12.06.2013
(73) Proprietor: Vilnius Gediminas Technical University, 10223 Vilnius (LT)
(72) Inventor: Sinica, Marijonas, 06216 Vilnius (LT); Sezeman, Georgij, 01210 Vilnius (LT); Cesnauskas, Vytautas, 47412 Kauno Raj. (LT); Mikulskis, Donatas, 06311 Vilnius (LT); Kligys, Modestas, 03151 Vilnius (LT)
(74) Representative: Garsviene, Ramune

(56) References cited:
- WO-A2-2008/126125
- US-A- 3 184 371
- SIM J ET AL: "Characteristics of basalt fiber as a strengthening material for concrete structures", COMPOSITES PART B: ENGINEERING, ELSEVIER, UK, vol. 36, no. 6-7, 1 January 2005 (2005-01-01), pages 504-512, XP027846744, ISSN: 1359-8368 [retrieved on 2005-01-01]
- Van de Valde et al.: "Basalt as Reinforcement for Composites", Ghent University , 21 September 2011 (2011-09-21), XP002690557, Retrieved from the Internet: URL:http://www.basaltex.com/files/cms1/Bas alt-Fibres-as-reinforcement-for-composites _Ugent.pdf [retrieved on 2013-01-18]

## Description

### Field of the Invention

This invention relates to the field of building materials industry, namely to methods of manufacturing of products from autoclaved aerated concrete with required higher mechanical and thermal resistance. The invention also relates to compositions for autoclaved aerated concrete.

### Background of the Invention

There is known a method for manufacturing of products from autoclaved aerated concrete, comprising steps of mixing of forming mix of composition for autoclave aerated concrete which comprises sand, aluminium powder, additive, water, binding material consisting of cement and lime, pouring of obtained mix to moulds, maturing, cutting it into products and their autoclave hardening. (See RU Patent No. 2253567, C04 B 38/02, pub. 2005).

The products manufactured in this way are not noted for good mechanical properties and good thermal resistance.

There is also known a method for manufacturing of products from autoclaved aerated concrete, comprising steps of mixing of forming mix of composition for autoclave aerated concrete which comprises sand, aluminium powder, pozzolanic additive, reinforcing fiber, water, binding material consisting of cement and lime, as well as autoclaved aerated concrete flour additive, pouring of obtained mix into moulds, maturing, cutting it into products and their autoclave hardening, wherein, as reinforcing fiber, glass-, carbon-, cellulose fibers are used and composition for autoclave aerated concrete is in the following proportions of components in %: cement 5-30, lime 10-25, sand 50-80, aluminium powder 0.5-1.3, pozzolanic additive 0.0-15, reinforcing fiber 0.1-4, water 5-7, autoclaved aerated concrete flour additive 0.5-4 (See publication of int. application pub. WO 2008126125, C04B 38/02, pub. 2008).

The shortage of products manufactured in this way from mentioned composition for autoclave aerated concrete lies in that reinforcing fibers of glass, carbon and cellulose only get coated by calcium hydrosilicates during autoclave hardening and that fibers do not sufficiently cohere with interpore partitions of aerated concrete and do not secure stability of dimensions of articles when exposed to temperature higher than 400°C. The products manufactured in this way have insufficient thermal and mechanical resistance and not enough good operating characteristics upon exposure to heat. Furthermore, the costs of manufacture are high because of high-costing fibers meant especially for reinforcement of concrete.

### Summary of the Invention

The objective of the invention is to increase the thermal and mechanical resistance of products from autoclaved aerated concrete and to enhance their operating characteristics upon exposure to heat and to cut down the costs of manufacture.

This objective can be reached by the method for manufacturing of products from autoclaved aerated concrete, as defined in claims 1-6.

The optimal parameters of products manufactured by the method for manufacturing of products from autoclaved aerated concrete and the optimal content of components constituting the composition for autoclaved aerated concrete are established experimentally.

The method for manufacturing of products from autoclaved aerated concrete and the composition for autoclaved aerated concrete disclosed in the invention are illustrated by the examples.

### Detailed Description of embodiments of the Invention

### Example I of the method for manufacturing of products from autoclaved aerated concrete

Before mixing of forming mix, the reinforcing fiber of basalt wool is prepared. To this aim, basalt wool production waste is cut by e.g. disc saw into pieces sized 3-6 mm. Then these pieces are fibered, e.g. mechanically, by grating them on sieve together with sand grains, which separate filaments one from another to let them fall into container with aqueous solution. To avoid cohesion between filaments in water, they are dispersed. The aqueous solution contains solved surface active material, e.g. UFOPORE TCO in 0.0013% of solid matter mass. The mixing is performed by mechanical propeller mixer. The said material coats the surface of filaments and separates them one from another. After fibering and dispersion, the length of filaments decreases to 0.1-6 mm. In this way the basalt wool fiber is obtained. The forming mix from cement, lime, sand, aluminium powder, pozzolanic additive, fiber and water is mixed in the vertical propeller mixer. The mixing lasts 10 min. The reinforcing fiber of basalt wool distributes evenly through forming mix. The type of used cement is Portland cement and, in capacity of pozzolanic additive, microsilica is used. Afterwards the mix is poured into moulds and matured at 60°C for 2 hours. Then it is cut into products, e.g. panels or blocks. After that the autoclave hardening of products takes place at pressure 1.0 MPa and temperature of 180°C for 11 hours (total duration of hardening is 15 hours considering pressure rise and drop in autoclave). The alkaline medium generated during autoclave hardening destroys the surface of basalt wool fiber, which is evenly distributed in the product, causing its corrosion. In medium of saturated water vapour, the dissolved lime reacts with silicium- and aluminium oxides present in the composition of fiber resulting in calcium- and aluminohydrosilicates. The new formations are similar to cement stone compounds of autoclave aerated concrete, i.e. calcium hydrosilicates, and closely accrete with them. In this way the qualitative link of reinforcing basalt wool fiber in aerated concrete is secured.

### Example 1 of the composition for autoclaved aerated concrete

The composition for autoclaved aerated concrete in mass % is the following:

| | |
|---|---|
| Portland cement | 8 |
| Lime | 21.1 |
| Sand | 69 |
| Aluminium powder | 0.2 |
| Microsilica | 0.9 |
| Reinforcing fiber of basalt wool | 0.3 |
| Water | 0.5. |

### Example 2 of the method for manufacturing of products from autoclaved aerated concrete

Example 2 of the method for manufacturing of products from autoclaved aerated concrete is analogical to Example 1, only the autoclave hardening of articles is performed at pressure of 1.1 MPa and temperature of 184°C for 10 hours (total duration of hardening is 14 hours considering pressure rise and drop in autoclave).

### Example 2 of the composition for autoclaved aerated concrete

The composition for autoclaved aerated concrete in mass % is the following:

| | |
|---|---|
| Portland cement | 3.1 |
| Lime | 18 |
| Sand | 67 |
| Aluminium powder | 0.2 |
| Microsilica | 0.9 |
| Reinforcing fiber of basalt wool | 0.3 |
| Water | 0.5. |

The physical and mechanical indexes of products from autoclaved aerated concrete are provided in Table 1.

**Table 1**

| Index | Example 1 | Example 2 |
|---|---|---|
| Compressive strength in MPa | 3.4 | 3.6 |
| Compressive strength after 25 cycles of heating-cooling in MPa | 2.4 | 2.6 |
| Shrinkage after heating for 12 hours at temperature of 650°C in % | 1.1 | 1.05 |
| Thermal stability coefficient expressed by heating-cooling cycles* | 25 | 25 |

| | | |
|---|---|---|
| *The heating of dried article lasts 30 min. at 650°C and the cooling lasts 20 min. at ventilation by air stream of room temperature. | | |

The applied method for manufacturing and composition for autoclaved aerated concrete are characterized in that products from this autoclaved aerated concrete meet the enhanced requirements for mechanical and thermal resistance. They can be used in constructions of fireproof walls or chimneys and for insulation of thermal assemblies.

## Claims

1. A method for manufacturing of products from autoclaved aerated concrete, comprising steps of:
mixing of forming mix of composition for autoclaved aerated concrete which comprises
sand, aluminium powder, pozzolanic additive, reinforcing fiber,
water, binding material consisting of cement and lime,
pouring of obtained mix into moulds,
maturing, cutting into products,
and their autoclave hardening,
**characterized in that**
the reinforcing fiber is from basalt wool and composition for autoclaved aerated concrete is in the following proportions of components in %:
| | |
|---|---|
| Cement | 3-25 |
| Lime | 15-30 |
| Sand | 60-80 |
| Aluminium powder | 0.15-0.3 |
| Pozzolanic additive | 0.4-1 |
| Reinforcing fiber of basalt wool | 0.1-0.8 |
| Water | not more than 6 |

2. A method for manufacturing of products from autoclaved aerated concrete according to claim 1, **characterized in that** before mixing of forming mix, the reinforcing fiber from basalt wool is obtained by crushing basalt wool and then fibering and dispersing crushed basalt wool.

3. A method for manufacturing of products from autoclaved aerated concrete according to claim 2, **characterized in that** basalt wool is a waste of basalt wool production.

4. A method for manufacturing of products from autoclaved aerated concrete according to claims 2-3, **characterized in that** the basalt wool is crushed into pieces sized 3-6 mm.

5. A method for manufacturing of products from autoclaved aerated concrete according to claims 1-4, **characterized in that** autoclave hardening is performed at temperature of 173-187°C and pressure of 0.8-1.2 MPa.

6. A method for manufacturing of products from autoclaved aerated concrete according to claims 1-5, **characterized in that** autoclave hardening lasts 8.5-12 hours.

7. A product from autoclaved aerated concrete manufactured according to claims 1-6.

## Patentansprüche

1. Verfahren zur Herstellung Produkten aus autoklaviertem Porenbeton, mit den Schritten:
mischen der Formmischung der Zusammensetzung für autoklavierten Porenbeton, umfassend
Sand, Aluminiumpulver, pozzolanisches Additiv, Verstärkungsfaser,
Wasser, Bindemittel aus Zement und Kalk,
ausgießen der erhaltenen Mischung in Formen,
reifen, schneiden in produkte,
und ihre Autoklavenhärtung,
**dadurch gekennzeichnet dass**
Die Verstärkungsfaser aus Basaltwolle besteht und Zusammensetzung für autoklavierten Porenbeton den folgenden Anteilen der Komponenten in%:
Zement 3-25
Kalk 15-30
Sand 60-80
Aluminiumpulver 0,15-0,3
Pozzolanisches Additiv 0,4-1
Verstärkungsfaser aus Basaltwolle 0,1-0,8
Wasser nicht mehr als 6, umfast.

2. Verfahren zur Herstellung von Produkten aus autoklaviertem Porenbeton nach Anspruch 1, **dadurch gekennzeichnet, dass** vor dem Mischen der Formmischung die Verstärkungsfaser aus Basaltwolle durch Zerkleinern von Basaltwolle und anschließendes Fasern und Dispergieren von zerkleinerter Basaltwolle erhalten wird.

3. Verfahren zur Herstellung von Produkten aus autoklaviertem Porenbeton nach Anspruch 2, **dadurch gekennzeichnet, dass** Basaltwolle aus Abfallmenge von Basaltwolle besteht.

4. Verfahren zur Herstellung von Produkten aus autoklaviertem Porenbeton nach den Ansprüchen 2-3, **dadurch gekennzeichnet, dass** die Basaltwolle in Stücke von 3-6 mm zerkleinert wird.

5. Verfahren zur Herstellung von Produkten aus autoklaviertem Porenbeton nach den Ansprüchen 1-4, **dadurch gekennzeichnet, dass** die Autoklavenhärtung bei einer Temperatur von 173-187 °C und einem Druck von 0,8-1,2 MPa durchgeführt wird.

6. Verfahren zur Herstellung von Produkten aus autoklaviertem Porenbeton nach den Ansprüchen 1-5, **dadurch gekennzeichnet, dass** die Autoklavenhärtung 8,5-12 Stunden dauert.

7. Produkt aus autoklaviertem Porenbeton, hergestellt nach den Ansprüchen 1-6.

## Revendications

1. Procédé de fabrication de produits de béton cellulaire autoclavé, comprenant les étapes consistant à:
mélange du mélange de formation de composition pour béton cellulaire autoclavé qui comprend
sable, poudre d'aluminium, additif pouzzolanique, fibre de renforcement,
eau, matériau liant constitué de ciment et de la chaux,
versement du mélange obtenu dans les moules,
maturation, découpe de produits,
et leur durcissement en autoclave,
**caractérisé en ce que**
la fibre de renforcement provient de la laine de basalte et la composition pour le béton cellulaire autoclavé est dans les proportions suivantes de composants en %:
Ciment 3-25
Chaux 15-30
Sable 60-80
Poudre d'aluminium 0.15-0.3
Additif pouzzolanique 0.4-1
Fibre de renforcement de la laine de basalte 0.1-0.8
L'eau pas plus que 6.

2. Procédé de fabrication de produits à partir de béton cellulaire autoclavé selon la revendication 1, **caractérisé en ce que** avant le mélange du mélange de formation, la fibre de renforcement à partir de la laine de basalte est obtenue par écrasement de la laine de basalte, puis fragmentation et dispersion de la laine de basalte écrasée.

3. Procédé de fabrication de produits à partir de béton cellulaire autoclavé selon la revendication 2, **caractérisé en ce que** dans lequel la laine de basalte est un déchet de production de laine de basalte.

4. Procédé de fabrication de produits à partir de béton cellulaire autoclavé selon les revendications 2-3, **caractérisé en ce que** la laine de basalte est écrasée en morceaux de 3-6 mm.

5. Procédé de fabrication de produits à partir de béton cellulaire autoclavé selon les revendications 1 à 4, **caractérisé en ce que** le durcissement en autoclave est effectué à une température de 173-187°C et une pression de 0,8 à 1,2 MPa.

6. Procédé de fabrication de produits à partir de béton cellulaire autoclavé selon les revendications 1 à 5, **caractérisé en ce que** dans le cas où le durcissement en autoclave dure de 8,5 à 12 heures.

7. Un produit en béton cellulaire autoclavé fabriqué selon les revendications 1 à 6.
